# EUROPÄISCHE PATENTANMELDUNG

(11) **EP 0 595 014 A1**
(43) Veröffentlichungstag der Anmeldung: **04.05.1994**
(21) Anmeldenummer: 93115076.7
(22) Anmeldetag: 20.09.1993
(51) Int. Cl.: B60T 8/36, B60T 8/50, F16K 1/44

(54) **Magnetventil**

(30) Priorität: 29.10.1992 DE 4236482
(71) Anmelder: ROBERT BOSCH GMBH, 70442 Stuttgart (DE)
(72) Erfinder: Fritsch, Siegfried, D-87527 Sonthofen (DE)

(57) **Zusammenfassung**

Ein insbesondere für Fahrzeugbremsanlagen mit Blockierschutzregelung verwendetes Magnetventil weist einen Ventileinlaß (20) zum Anschließen eines Druckgebers und einen Ventilauslaß (21) zum Anschließen eines Druckempfängers, ein die Verbindung zwischen Ventilein- und -auslaß (20,21) steuerndes Ventilglied (18), einen mit zwei unterschiedlichen Erregerströmen steuerbaren Elektromagneten (13) zum Betätigen des Ventilglieds (18) gegen die Kraft der Rückstellfeder (19) und eine zwischen Ventilein- und -auslaß (20,21) wirksame Drossel (32) zum Verzögern des Druckanstiegs am Ventilauslaß (21) auf. Zwecks Erzielen eines konstruktiv einfachen Ventilaufbaus mit dem Vorteil der kostengünstigen Fertigung ist die Drossel (32) zur wahlweisen Zuschaltung im Ventilglied (18) angeordnet und dieses so ausgebildet, daß durch Ansteuerung des Elektromagneten (13) mit dem einen Erregerstrom die Drossel (32) zwischen dem Ventilein- und -auslaß (20,21) eingeschaltet wird und bei Ansteuerung des Elektromagneten (13) mit dem anderen Erregerstrom bzw. Wegfall der Magnetansteuerung Ventilein- und -auslaß (20,21) jeweils voneinander getrennt bzw. miteinander verbunden sind.

## Beschreibung

### Stand der Technik

Die Erfindung geht aus von einem Magnetventil, insbesondere für Fahrzeugbremsanlagen mit Blockierschutzregelung, der im Oberbegriff des Anspruchs 1 definierten Gattung.

Ein bekanntes Magnetventil dieser Art ist als Einlaßventil Teil einer Magnetventilanordnung in einer Bremsanlage mit Blockierschutzregelung, die aus insgesamt drei von einem gemeinsamen Elektromagneten betätigten Magnetventilen besteht (US-PS 47 65 693). Bei diesem Einlaß-Magnetventil wird die Drossel von einer Lochscheibe gebildet, die dem Ventileinlaß in Strömungsrichtung nachgeordnet ist. Diese Lochscheibe dient gleichzeitig zur Abstützung der Rückstellfeder, die das Ventilglied in Ventilschließrichtung belastet. Das Ventilglied ist so mit dem Elektromagneten gekoppelt, daß es bei unbestromtem Elektromagneten gegen die Rückstellfeder vom zugeordneten Ventilsitz abgehoben ist und bei bestromtem Elektromagneten zur Schließbewegung durch die Rückstellfeder freigegeben wird.

Parallel zu dem genannten Magnetventil ist ein ebenfalls als Einlaßventil verwendetes zweites Magnetventil zwischen dem Ventilein- und -auslaß der Magnetventilanordnung, angeordnet, das ebenfalls eine Lochscheibe aufweist, deren Durchmesser aber wesentlich größer ist als der Drosseldurchmesser der vorgenannten Lochscheibe. Die Rückstellfeder stützt sich wiederum an der Lochscheibe und am Ventilglied ab und belastet letzteres in Schließrichtung des zweiten Magnetventils. Das Ventilglied ist mit dem Elektromagneten über eine der Rückstellfeder entgegenwirkende Feder gekoppelt, wobei die Federkräfte unter Berücksichtigung der auf das Ventilglied vom Ventilein- und -auslaß her wirkenden Druckkräfte so abgestimmt sind, daß nach Abschalten der Magneterregung das Ventilglied erst dann öffnet, wenn eine im Schließsinn wirkende Druckdifferenz einen Vorgabewert unterschreitet.

Durch die beiden Parallelen, von dem gleichen Elektromagneten betätigten Einlaß-Magnetventilen wird somit erreicht, daß bei aktiver Blockierschutzregelung, bei welcher eine große Druckdifferenz zwischen Ventilein- und -auslaß auftritt, nur daß die Drossel enthaltende Magnetventil geöffnet ist, so daß der Bremsdruckanstieg am Ventilauslaß und damit im Radbremszylinder verlangsamt wird, und bei nicht aktiver Blockierschutzregelung, also bei Bremspedalbetätigung, bei welcher nur geringe Druckdifferenzen zwischen Ventilein- und -auslaß auftreten, beide Magnetventile geöffnet sind, somit große Strömungsquerschnitte zur Verfügung stehen und Bremsdrücke in dem Radbremszylinder unbehindert aufgebaut werden können.

Von dem Elektromagneten wird noch ein drittes Magnetventil betätigt, das als Auslaßventil zwischen dem Ventilauslaß und einer Entlastungsleitung angeordnet ist und mittels dessen der Druck am Ventilauslaß und damit in dem Radbremszylinder abgebaut werden kann. Das Ventilglied dieses Auslaß-Magnetventils ist von einer Ventilschließfeder in Schließrichtung belastet, die bei unbestromtem Elektromagneten das Auslaßventil schließt. Das Ventilglied ist mit dem Elektromagneten so gekoppelt, daß es bei Ansteuerung des Elektromagneten mit einer ersten Stromstärke, bei welcher die beiden Einlaßventile zur Schließbewegung durch die Rückstellfedern freigegeben werden, in seiner Schließstellung verharrt und erst bei Ansteuerung des Elektromagneten mit einer zweiten, größeren Stromstärke, gegen die Kraft der Schließfeder vom zugeordneten Ventilsitz abhebt, das Auslaßventil also öffnet.

Die beiden Einlaßventile und das Auslaßventil der bekannten Magnetventilanordnung bilden zusammen mit dem gemeinsamen Elektromagneten zum Antrieb der Ventilglieder insgesamt ein 3/3-Wegemagnetventil, mit welchem der Bremsdruck in dem Radbremszylinder gedrosselt oder ungedrosselt aufgebaut und wieder abgebaut werden kann. Diese Magnetventilanordnung ist konstruktiv sehr aufwendig und damit in der Herstellung relativ teuer.

### Vorteile der Erfindung

Das erfindungsgemäße Magnetventil mit den kennzeichnenden Merkmalen des Anspruchs 1 hat demgegenüber den Vorteil des konstruktiven einfachen Aufbaus als 2-Wegeventil mit drei Schaltstellungen, in denen wahlweise die Ventilöffnung gedrosselt und ungedrosselt freigegeben und abgesperrt ist. Bevorzugt kann zur Herstellung des erfindungsgemäßen Magnetventils auf Standard-Ventile zurückgegriffen werden, die als 2/2-Wegemagnet-Einlaßventile in Bremsanlagen eingesetzt werden, hier kann das komplette Gehäuse mit Elektromagneten übernommen werden, und lediglich das Ventilglied muß ausgetauscht und die Ansteuerung des Elektromagnetens um eine Stufe erweitert werden. Zur Elektromagnetansteuerung können herkömmliche Stromregler verwendet werden, wie sie zur Ansteuerung von 3/3-Wegemagnetventilen eingesetzt werden. Der Platzbedarf des erfindungsgemäßen Magnetventils ist damit nicht größer als der der bisherigen 2/2-Wegemagnet-Einlaßventile in Bremsanlagen und deutlich geringer als die eingangs beschriebene Magnetventilanordnung in ihrer 3/3-Wegemagnetventilausführung mit drei in einem gemeinsamen Ventilgehäuse integrierten, von einem gemeinsamen Elektromagneten betätigten separaten Ventilen.

Durch die in den weiteren Ansprüchen aufgeführten Maßnahmen sind vorteilhafte Weiterbildungen und Verbesserungen des im Anspruch 1 angegebenen Magnetventils möglich.

Eine vorteilhafte technische Realisierung des erfindungsgemäßen Magnetventils wird gemäß einer bevorzugten Ausführungsform der Erfindung dadurch erzielt, daß das mit einem Ventilsitz zum Öffnen und Freigeben einer zwischen einem Ventilein- und -auslaß angeordneten, vom Ventilsitz umschlossenen Ventilöffnung zusammenwirkende Ventilglied zweiteilig ausgebildet ist. Das Ventilglied besteht aus einem mit einem Anker des Elektromagneten gekoppelten Ventilstößel, an dessen vom Anker abgekehrten Stirnende ein Schließelement ausgebildet ist, und einer über dieses Stirnende des Ventilstößels geschobenen, auf diesem axial verschiebbaren Schließkappe, die sich über eine Barrierefeder am Ventilstößel abstützt. Am Kappenboden der Schließkappe ist außen ein mit dem Ventilsitz zusammenwirkendes zweites Schließelement und innen ein mit dem ersten Schließelelement am Ventilstößel zusammenwirkender zweiter Ventilsitz vorgesehen. Der Kappenboden weist eine zentrale, axiale Drosselbohrung und die Kappenwand mindestens eine Radialbohrung auf. Bei dieser konstruktiven Ausführung des erfindungsgemäßen Magnetventils kann das Ventilglied extern montiert werden.

Nach Zusammenbau des Magnetventils stützt sich die Rückstellfeder an der Schließkappe ab. Die Federkraft der Rückstellfeder ist kleiner bemessen als die der Barrierefeder und so ausgelegt, daß sie bei unbestromtem Elektromagneten das Schließelement der Schließkappe von dem zugeordneten Ventilsitz abhebt, das Magnetventil also geöffnet ist. Der maximale Erregerstrom zur Ansteuerung des Elektromagneten ist so bemessen, daß die vom Elektromagneten damit erzeugte Magnetkraft größer ist als die Summe der Federkräfte von Rückstell- und Barrierefeder und der vom Druck am Ventileinlaß auf die Schließkappe ausgeübten Druckkraft. Der gegenüber dem maximalen Erregerstrom kleinere Erregerstrom des Elektromagneten in der ersten Schaltstufe ist hingegen so bemessen, daß die vom Elektromagneten damit erzeugte Magnetkraft größer ist als die Summe aus der Federkraft der Rückstellfeder der vom Druck am Ventileinlaß auf die Schließkappe ausgeübten Druckkraft aber kleiner als die Federkraft der Barrierefeder.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt eines Magnetventils für eine Kraftfahrzeugbremsanlage mit Blockierschutzregelung,
- Fig. 2: zwei Diagramme zur Verdeutlichung des Zusammenhangs zwischen Erregerstrom des Elektromagneten und Druckaussteuerung am Ventilauslaß des Magnetventils in Fig. 1.
- Fig. 3: einen Längsschnitt eines modifizierten Ventilglieds im Magnetventil gemäß Fig. 1.

### Beschreibung des Ausführungsbeispiels

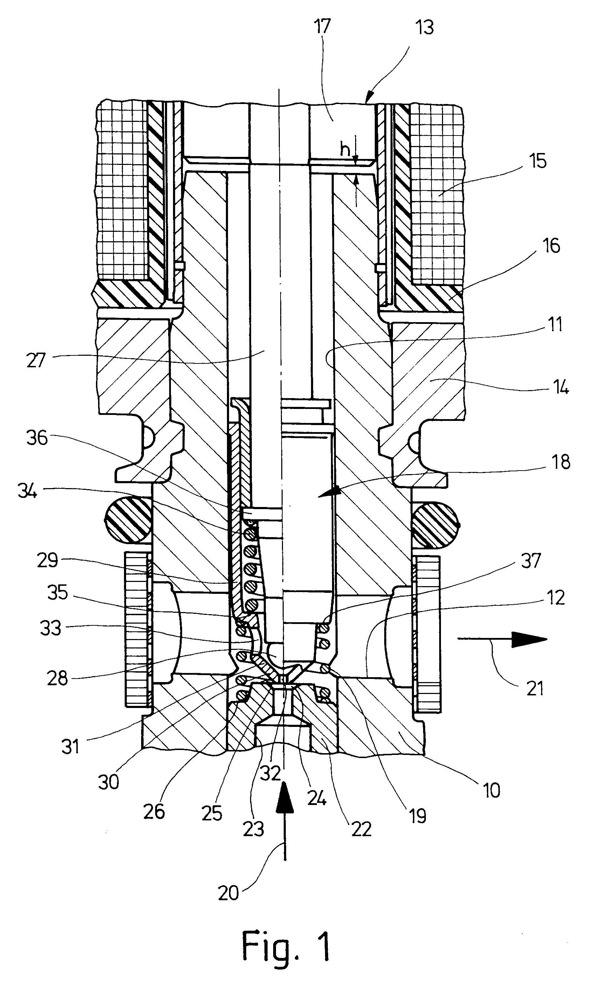

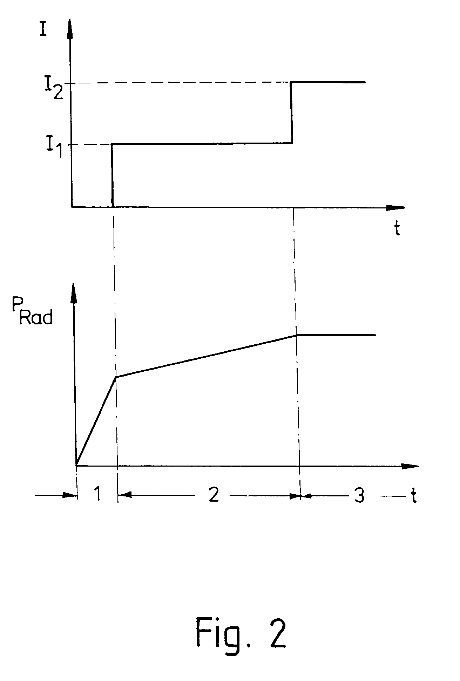

Das in Fig. 1 ausschnittweise im Längsschnitt dargestellte Magnetvenitl wird als Einlaßventil bei einer Kraftfahrzeug-Bremsanlage mit Blockierschutzregelung eingesetzt. Es weist ein Gehäuse 10 mit einer zentralen Längsbohrung und mit einer diese durchdringenden Querbohrung 12 auf, auf dessen einem Stirnende ein Elektromagnet 13 aufgesetzt ist. Der nur teilweise dargestellte Elektromagnet 13 besteht in bekannter Weise aus einem Magnettopf 14, der über das Stirnende des Gehäuses 10 hinweggeschoben ist, einer im Magnettopf 14 axial angeordneten Erregerspule 15, die auf einem zylindrischen Spulenträger 16 aufgenommen ist, und einem im Innern des Spulenträgers 16 axial verschiebbar geführten Anker 17, der bei unerregtem Elektromagneten 13 mit einem Hubabstand h vor der Stirnseite des Gehäuses 10 liegt. Wie aus dem oberen Diagramm der Fig. 2 hervorgeht, wird die Erregerspule 15 des Elektromagneten 13 mit zwei Erregerströmen I₁ und I₂ angesteuert, die unterschiedliche Stromstärken aufweisen. Der Elektromagnet 13 dient zur Betätigung eines Ventilglieds 18, das von einer Rückstellfeder 19 gegen den Anker 17 des Elektromagneten 13 angedrückt wird, und überführt dieses entsprechend seiner Ansteuerung mit den beiden unterschiedlichen Erregerströmen I₁, I₂ in zwei Verschiebepositionen.

Das Ventilglied 18 dient zum Steuern der Verbindung zwischen einem Ventileinlaß und einem Ventilauslaß, die in Fig. 1 mit Pfeilen 20 und 21 angedeutet sind. Der zum Anschluß an einen Druckgeber vorgesehene Ventileinlaß 20 mündet dabei an dem von dem Elektromagneten 13 abgekehrten Ende des Gehäuses 10 in der Längsbohrung 11 während der zum Anschluß an einen Druckempfänger bestimmte Ventilauslaß 21 mit der Querbohrung 12 in Verbindung steht. In dem zwischen Ventileinlaß 20 und der Querbohrung 12 liegenden Bohrungsabschnitt der Längsbohrung 11 ist ein Ventilkörper 22 eingepreßt, der von einer axialen Stufenbohrung 23 durchzogen ist. Das eine Stirnende des Ventilkörpers 22 liegt dabei unmittelbar vor der Querbohrung 12 und die an diesem Stirnende liegende Bohrungsmündung des durchmesserkleineren Bohrungsabschnittes der Stufenbohrung 23 bildet die von dem Ventilglied 18 gesteuerte Ventilöffnung 24 des Magnetventils. Die Ventilöffnung 24 ist konzentrisch von einem am Ventilkörper 22 ausgebildeten Ventilsitz 25 umgeben. Außerdem ist am Ventilkörper 22 eine Ringschulter 26 ausgebildet, an dem sich die als Schraubendruckfeder ausgebildete Rückstellfeder 19 abstützt.

Das Ventilglied 18, das in Fig. 1 teilweise im Längsschnitt dargestellt ist, ist zweiteilig ausgebildet und besteht aus einem Ventilstößel 27, an dessen dem Ventilkörper 22 zugekehrten Ende ein erstes Schließelelement 28 ausgebildet ist, und aus einer über das das Schließelement 28 tragende Ende des Ventilstößels 27 geschobenen Schließkappe 29, die an ihrem dem Ventilkörper 22 zugekehrten Kappenboden außen mit einem zweiten Schließelelement 30, das mit dem Ventilsitz 25 am Ventilkörper 22 zusammenwirkt, und innen mit einem zweiten Ventilsitz 31 versehen ist, der mit dem ersten Schließelement 28 am Ventilstößel 27 zusammenwirkt. Das Schließelement 30 ist dabei kegelstumpfförmig ausgebildet, wobei an seiner Außenmantelfläche eine dem Ventilsitz 25 angepaßte Schließfläche und an seiner Innenmantelfläche eine dem kugelförmigen Schließelement 28 angepaßte Ventilsitzfläche ausgebildet ist. Im Kappenboden ist eine zentrale Drosselbohrung 32 axial eingebracht, während in der Kappenwand mindestens eine Radialbohrung 33 vorgesehen ist. Drosselbohrung 32 und Radialbohrung 33 stehen über das Innere der Schließkappe 29 miteinander in Verbindung, die dann unterbrochen wird, wenn das am Ventilstößel 27 ausgebildete kugelförmige Schließelement 28 auf dem am Kappenboden der Schließkappe 29 ausgebildeten Ventilsitz 31 aufliegt.

Die auf dem Ventilstößel 27 axial verschiebbare Schließkappe 29 ist aus Blech tiefgezogen und stützt sich über eine Barrierefeder 34 am Ventilstößel 27 ab. Die Barrierefeder 34 ist als Schraubendruckfeder ausgebildet, die im Innern der Schließkappe 29 den Ventilstößel 27 koaxial umgibt und sich an einer inneren Ringschulter 35 der Schließkappe 29 sowie an einem Radialflansch 36 des Ventilstößels 27 abstützt. Die Ringschulter 35 ist dabei aus der Schließkappe 29 nach innen ausgeprägt, und die Schließkappe 29 übergreift die Barrierefeder 34 vollständig bis über den Radialflansch 36 hinaus. Der Ventilstößel 27 erstreckt sich bis zum Ende des Gehäuses 10 und liegt dort am Anker 17 des Elektromagneten 13 an, wobei der Anlagedruck von der Rückstellfeder 19 aufgebracht wird, die sich an einer äußeren Ringschulter 37 an der Schließkappe 29 abstützt und über die Barrierefeder 34 den Ventilstößel 27 an den Anker 17 anlegt. Die Vorspannung bzw. die Federkraft der Barrierefeder 34 ist dabei wesentlich größer bemessen als die Vorspannung bzw. Federkraft der Rückstellfeder 19 und beträgt beispielsweise das Fünffache.

Die Wirkungsweise des beschriebenen Magnetventils ist wie folgt:
Bei unerregtem Elektromagneten 13 nimmt das Ventilglied 18 seine in Fig. 1 dargestellte Stellung ein. Dabei ist das an der Schließkappe 29 ausgebildete Schließelement 30 vom Ventilsitz 25 am Ventilkörper 22 abgehoben. Die Ventilöffnung 24 ist freigegeben, und Bremsflüssigkeit kann vom Ventileinlaß 20 zum Ventilauslaß 21 strömen. Bei Verwendung des Magnetventils in einer Bremsanlage ist mit dem Ventileinlaß 20 der Hauptbremszylinder und mit dem Ventilauslaß 21 ein Radbremszylinder der Bremsanlage verbunden, so daß in dem Radbremszylinder über den Hauptbremszylinder ein Bremsdruck aufgebaut werden kann.

Wird die Erregerspule 15 mit dem Erregerstroms I₁ (Fig. 1) bestromt, so bewegt sich der Anker 17 des Elektromagneten 13 um einen Hub, der kleiner ist als der Maximalhub h, in Richtung Stirnseite des Gehäuses 10. Durch den dabei vom Anker 17 mitgenommenen Ventilstößel 27 wird über die Barrierefeder 34 die Schließkappe 29 zum Ventilkörper 22 hin bewegt und setzt sich mit ihrem Schließelement 30 auf den am Ventilkörper 22 ausgebildeten Ventilsitz 25 auf. Der Erregerstrom I₁ ist so bemessen, daß die vom Elektromagneten 13 damit erzeugte Magnetkraft größer ist als die Summe aus der Federkraft der Rückstellfeder 19 und der vom Druck am Ventileinlaß 20 auf die Schließkappe 29 ausgeübten Druckkraft aber kleiner als die Federkraft der Barrierefeder 34. Damit bleibt das am Ventilstößel 27 ausgebildete Schließelement 28 vom an dem Kappenboden der Schließkappe 29 innen ausgebildeten Ventilsitz 31 abgehoben, und es besteht eine Verbindung vom Ventileinlaß 20 über die Drosselbohrung 32 und Radialbohrung 33 in der Schließkappe 29 und dem Ventilauslaß 21. Damit wird der Bremsflüssigkeitsstrom vom Ventileinlaß 20 zum Ventilauslaß 21 gedrosselt und Bremsdruck kann sich am Ventilauslaß 21 bzw. in dem daran angeschlossenen Radbremszylinder nur verlangsamt aufbauen. Diese Ansteuerung des Elektromagneten 13 mit dem kleineren Erregerstrom I₁ wird im Blockierschutzregelfall durchgeführt, um die Druckanstiegsgeschwindigkeit im Radbremszylinder zu verzögern und trotz hohen Druckgefälles zwischen Ventileinlaß 20 und Ventilauslaß 21 die auf die Zeiteinheit bezogene Bremsflüssigkeitsmenge, die zum Radbremszylinder strömt, in Grenzen zu halten.

Wird die Erregerspule 15 des Elektromagnetne 13 mit dem maximalen Erregerstrom I₂ beaufschlagt, so wird durch die erhöhte Magnetkraft die Federkraft bzw. Vorspannung der Barrierefeder 34 überwunden und vom Anker 13 der Ventilstößel 27 soweit verschoben, bis sein kugelförmiges Schließelement 28 auf den am Innern des Kappenbodens der Schließkappe 29 ausgebildeten Ventilsitz 31 auftrifft. Damit wird auch die Drosselverbindung zwischen dem Ventileinlaß 20 und dem Ventilauslaß 21 unterbrochen, und die Ventilöffnung 24 ist vollständig abgedichtet. In dieser Stellung des Magnetventils ist der Radbremszylinder vom Hauptbremszylinder getrennt und der Druck in dem Radbremszylinder kann gehalten oder durch ein Auslaßventil wieder abgebaut werden. Um diese Funktion des Magnetventils zu gewahrleisten, ist der maximale Erregerstrom I₂ zur Ansteuerung des Elektromagneten 13 so bemessen, daß die vom Elektromagneten 13 damit erzeugte Magnetkraft größer ist als die Summe der Federkraft von Rückstell- und Barrierefeder 19,34 und der vom Druck am Ventilauslaß 21 auf die Schließkappe 29 ausgebildete Druckkraft.

Fällt die Ansteuerung des Elektromagneten 13 fort, so wird das Ventilglied 18 von der Rückstellfeder 19 wieder in seine in Fig. 1 dargestellte Ventiloffenstellung zurückgeschoben, und es besteht eine direkte, ungedrosselte Verbindung zwischen Ventileinlaß 20 und Ventilauslaß 21. In dieser Ventilstellung des Magnetventils können große Druckmittelmengen vom Hauptbremszylinder in den Radbremszylinder strömen und der vom Fahrer gewünschte Bremsdruck wird ohne Verzögerung im Radbremszylinder wirksam. Diese Stellung des Magnetventils wird beim Bremsen und nicht wirksamer Blockierschutzregelung herbeigeführt. In dem unteren Diagramm der Fig. 2 ist der Druck P_{Rad} im Radbremszylinder bzw. am Ventilauslaß 21 über der Zeit dargestellt. Im Bereich 1 ist der Elektromagnet 13 nicht erregt. Die Ventilöffnung 24 des Magnetventils wird mit ihrem maximalen Strömungsquerschnitt freigegeben. Bei Betätigung des Bremspedals strömen damit große Bremsflüssigkeitsmengen vom Hauptbremszylinder in den Radbremszylinder. Der Bremsdruckgradient, d.h. die Anstiegsgeschwindigkeit des Bremsdrucks, ist sehr groß, und der vom Fahrer eingestellte Bremsdruck wird ohne größere Verzögerung im Radbremszylinder wirksam.

Im Abschnitt 2 in Fig. 2 wird der Elektromagnet 13 mit dem Erregerstrom I₁ angesteuert. Dies ist dann der Fall, wenn die Radsensoren einen Radschlupf sensieren und die Bremsschutzregelung aktiviert wird. Durch das auf den Ventilsitz 25 am Ventilkörper 22 aufsetzende Schließelement 30 an der Schließkappe 29 wird die Ventilöffnung 24 teilweise abgedichtet, und für den Druckmittelstrom steht nur noch der Querschnitt der Drosselbohrung 32 zur Verfügung. Der Bremsdruckgradient im Radbremszylinder bzw. am Ventilauslaß 21 nimmt stark ab. Ein nach Druckabbau im Radbremszylinder wieder eingesteuerter Druckaufbau im Radbremszylinder erfolgt wesentlich langsamer.

Im Abschnitt 3 in Fig. 2 wird der Elektromagnet 13 mit dem maximalen Erregerstrom I₂ angesteuert. Hier setzt das kugelförmige Schließelement 28 am Ventilstößel 27 auf den Ventilsitz 31 an der Schließkappe 29 auf und verschließt auch die Drosselbohrung 32. Damit ist der Ventilauslaß 21 hermetisch vom Ventileinlaß 20 getrennt. Der Druck am Ventilauslaß bzw. im Radbremszylinder wird gehalten oder kann über ein am Radbremszylinder zusätzlich vorgesehenes Auslaßventil abgesenkt werden.

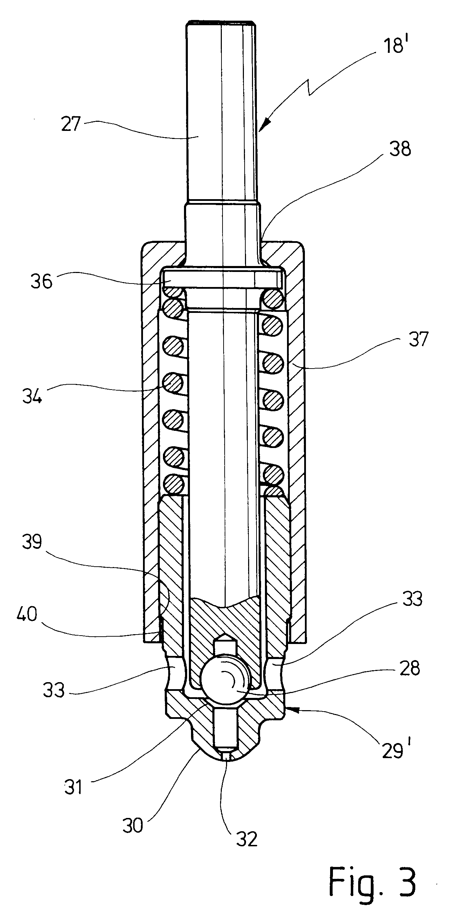

In Fig. 3 ist im Längsschnitt ein modifiziertes Ventilglied 18' dargestellt, wie es anstelle des vorstehend beschriebenen Ventilglieds 18 in dem Magnetventil gemäß Fig. 1 verwendet werden kann. Bei diesem Ventilglied 18' ist die Schließkappe 29' als Drehteil hergestellt und somit fertigungsgerechter ausgeführt als das Tiefziehteil der Schließkappe 29 beim Ventilglied 18. Die Schließkappe 29' wird hier von einem becherförmigen Drehteil gebildet, wobei am Drehteilboden wiederum das Schließelement 30, der koaxiale Ventilsitz 31 und die koaxiale Drossel 32 ausgebildet sind. Die Radialbohrungen 33 sind in die Zylinderwand des Drehteils eingebracht. Der Ventilstößel 27 trägt in unveränderter Weise auf seiner Stirnseite das als Kugel ausgebildete erste Schließelement 28 und im Axialabstand von der Stirnseite den Radialflansch 36. Die wiederum als Schraubendruckfeder ausgebildete Barrierefeder 34 stützt sich einerseits in gleicher Weise an der Ringfläche des Ringflansches 36 und andererseits an der ringförmigen Stirnseite der Schließkappe 29' ab. Die Barrierefeder 34 und der größte Teil der Zylinderwand der Schließkappe 39', mit Ausnahme des Bereichs der Radialbohrungen 33, werden von einer becherförmigen Führungshülse 37 übegriffen, in deren Hülsenboden ein Zentralloch 38 zum Aufschieben der Führungshülse 37 auf den Ventilstößel 27 vorgesehen ist. Der Hülsenboden umschließt dabei mit geringem Abstand den Ventilstößel 27 und liegt mit seiner inneren Bodenfläche an dem Radialflansch 36 des Ventilstößels 27 an. Nahe ihrem von dem Hülsenboden abgekehrten Rand trägt die Führungshülse 37 mindestens einen radial nach innen vorspringenden Anschlag 39, der unter der Wirkung der Barrierefeder 34 gegen einen Gegenanschlag 40 an der Schließkappe 29' gedrückt wird. Anschlag 39 und Gegenanschlag 40 können beispielsweise durch einen Bajonettverschluß realisiert werden, der z.B. aus mindestens einem von der Innenwand der Führungshülse 37 abstehenden Radialzapfen und mindestens einer vom freien Ende der Schließkappe 29' ausgehenden Axialnut besteht, die endseitig in eine sich in Umfangsrichtung der Schließkappe 29' erstreckende Quernut übergeht. Die Führungshülse 37 ist beim Aufschieben auf die Schließkappe 29' so zu stellen, daß der Radialzapfen in der Axialnut entlanggleiten kann. Durch eine Drehbewegung am Ende der Aufschiebebewegung wird der Radialzapfen dann in die Quernut eingeschoben, so daß nunmehr Anschlag 39 und Gegenanschlag 40 aneinanderliegen. Der Außendurchmesser der Führungshülse 37 ist so bemessen, daß das Ventilglied 18' in der Längsbohrung 11 im Gehäuse 10 annähernd spiellos geführt ist.

Diese konstruktive Ausgestaltung des Ventilglieds 18' hat den Vorteil, daß das Ventilglied 18' extern montiert werden kann, wobei auch schon die Vorspannung der Barrierefeder 34 eingestellt und der Hub des Schließelements 28 justiert werden kann.

## Patentansprüche

1. Magnetventil, insbesondere für Fahrzeugbremsanlagen mit Blockierschutzregelung, mit einem Ventileinlaß (20) zum Anschließen eines Druckgebers, insbesondere eines Hauptbremszylinders, und einem Ventilauslaß (21) zum Anschließen eines Druckempfängers, insbesondere eines Radbremszylinders, mit einem die Verbindung zwischen Ventilein- und -auslaß (20,21) steuernden Ventilglied (18), mit einem mit zwei unterschiedlichen Erregerströmen (I₁,I₂ ) ansteuerbaren Elektromagneten (13) zum Betätigen des Ventilglieds (18), mit einer Rückstellfeder (19) zum Rückführen des Ventilglieds (18) bei unbestromtem Elektromagneten (13) und mit einer zwischen Ventilein- und -auslaß (20,21) wirksamen Drossel (32) zum Verzögern des Druckanstiegs am Ventilauslaß (21), dadurch gekennzeichnet, daß die Drossel (32) im Ventilglied (18) angeordnet und dieses so ausgebildet ist, daß durch Ansteuerung des Elektromagneten (13) mit dem einen Erregerstrom (I₁) die Drossel (32) zwischen den Ventilein- und -auslaß (20,21) eingeschaltet wird und bei Ansteuerung des Elektromagneten (13) mit dem anderen Erregerstrom (I₂) und bei Wegfall der Elektromagnetansteuerung Ventilein- und -auslaß (20,21) jeweils voneinander getrennt bzw. miteinander verbunden sind.

2. Ventil nach Anspruch 1, dadurch gekennzeichnet, daß die Ausbildung des Ventilglieds (18) so getroffen ist, daß bei Wegfall der Elektromagnetansteuerung Ventilein- und -auslaß (20,21) miteinander in Verbindung stehen, bei Ansteuerung des Elektromagneten (13) mit dem maximalen Erregerstrom (I₂) Ventilein- und -auslaß (20,21) voneinander abgeschottet sind und bei Ansteuerung des Elektromagneten (13) mit einem gegenüber dem maximalen Erregerstrom (I₂) reduzierten Erregerstrom (I₁) Ventilein- und -auslaß (20,21) über die Drossel (32) miteinander verbunden sind.

3. Ventil nach Anspruch 2, dadurch gekennzeichnet, daß das mit einem Ventilsitz (25) zum Öffnen und Freigegeben einer zwischen Ventilein- und -auslaß (20,21) angeordneten, vom Ventilsitz (25) umschlossenen Ventilöffnung (24) zusammenwirkende Ventiglied (18) zweiteilig ausgebildet ist und einen mit einem Anker (17) des Elektromagneten (13) gekoppelten Ventilstößel (27) mit an dessen vom Anker (17) abgekehrten Stirnende ausgebildetem Schließelement (28) und eine über dieses Stirnende des Ventilstößels (27) geschobene, auf diesem axial verschiebare Schließkappe (29) aufweist, die sich über eine Barrierefeder (34) am Ventilstößel (27) abstützt und am Kappenboden außen ein mit einem Ventilsitz (25) zusammenwirkendes Schließelement (30) und innen einen mit dem am Ventilstößel (27) ausgebildeten Schließelement (25) zusammenwirkenden Ventilsitz (31) trägt, und daß im Kappenboden eine zentrale, axiale Drosselbohrung (32) und in der Kappenwand mindestens eine Radialbohrung (33) jeweils durchgängig eingebracht ist.

4. Ventil nach Anspruch 3, dadurch gekennzeichnet, daß die Rückstellfeder (19) an der Schließkappe (29) angreift und so angeordnet ist, daß sie bei unbestromtem Elektromagneten (13) deren Schließelement (30) von dem die Ventilöffnung (24) umgebenden Ventilsitz (25) abhebt, und daß die Federkraft der Barrierefeder (34) wesentlich größer bemessen ist als die der Rückstellfeder (19).

5. Ventil nach Anspruch 3 oder 4, dadurch gekennzeichnet, daß das schließkappenseitige Schließelement (30) kegelstumpfförmig ausgebildet ist, wobei an seiner Außenmantelfläche eine mit dem die Ventilöffnung (24) umgebenden Ventilsitz (25) zusammenwirkende Schließfläche und an seiner Innenmantelfläche der mit dem ventilstößelseitigen Schließelement (28) zusammenwirkende Ventilsitz (31) ausgebildet ist.

6. Ventil nach einem der Ansprüche 3 - 5, dadurch gekennzeichnet, daß in einem Ventilgehäuse (10) eine Längsbohrung (11) und eine diese durchdringende Querbohrung (12) eingebracht sind, daß die Längsbohrung (11) an ihrem einen Ende mit dem Ventileinlaß (20) und die Querbohrung (12) mit dem Ventilauslaß (21) in Verbindung steht, daß im Bohrungsabschnitt zwischen Ventileinlaß (20) und Querbohrung (12) ein Ventilkörper (22) mit zentraler Durchgangsbohrung (23) eingesetzt ist, an dessen der Querbohrung (12) zugekehrten Stirnseite der Ventilsitz (25) koaxial zu der die Ventilöffnung (24) bildenden Mündung der Durchgangsbohrung (23) ausgebildet ist, daß die auf dem Ventilstößel (27) verschiebbar sitzende Schließkappe (29) in dem jenseits der Querbohrung liegenden Bohrungsabschnitt der Längsbohrung (11) axial verschiebbar einliegt und daß die als Schraubendruckfeder ausgebildete Rückstellfeder (19) sich jeweils an eine an der Schließkappe (29) und an dem Ventilkörper (22) ausgebildeten ringförmigen Schulter (37,26) abstützt.

7. Ventil nach Anspruch 6, dadurch gekennzeichnet, daß der Elektromagnet (13) an das vom Ventileinlaß (20) abgekehrte Stirnende des Ventilgehäuses (10), dieses teilweise übergreifend, angesetzt ist und daß der Ventilstößel (27) bei unerregtem Elektromagneten (13) mit einem vorgegebenen Maß (h) über das Stirnende des Ventilgehäuses (10) vorsteht und stirnseitig an dem Anker (17) des Elektromagneten (13) anliegt.

8. Ventil nach einem der Ansprüche 2 - 7, dadurch gekennzeichnet, daß der maximale Erregerstrom (I₂) zur Ansteuerung des Elektromagneten (13) so bemessen ist, daß die vom Elektromagneten (13) damit erzeugte Magnetkraft größer ist als die Summe der Federkräfte von Rückstell- und Barrierefeder (19,34) und der vom Druck am Ventileinlaß (20) auf die Schließkappe (29) ausgeübten Druckkraft.

9. Ventil nach einem der Ansprüche 2 - 8, dadurch gekennzeichnet, daß der gegenüber dem maximalen Erregerstrom (I₂) kleinere Erregerstrom (I₁) zur Ansteuerung des Elektromagneten (13) so bemessen ist, daß die vom Elektromagneten (13) damit erzeugte Magnetkraft größer ist als die Summe aus der Federkraft der Rückstellfeder (19) und der vom Druck am Ventileinlaß (20) auf die Schließkappe (29) ausgeübten Druckkraft aber kleiner als die Federkraft der Barrierefeder (34).

10. Ventil nach einem der Ansprüche 3 - 9, dadurch gekennzeichnet, daß die Schließkappe (29) aus Blech tiefgezogen ist und die Barrierefeder (34) vollständig über deren Abstützstelle (36) am Ventilstößel (27) hinaus übergreift und daß die Barrierefeder (34) sich stirnseitig an einer in der Schließkappe (29) nach innen ausgeprägten Ringschulter (35) abstützt.

11. Ventil nach einem der Ansprüche 3 - 9, dadurch gekennzeichnet, daß die Schließkappe (29') als becherförmiges Drehteil mit am Drehteilboden ausgebildetem Schließelement (30), Ventilsitz (31) und Drossel (32) hergestellt ist, daß die Barrierefeder (34) sich einerseits an der ringförmigen Stirnseite des Drehteils und andererseits an einem am Ventilstößel (27) ausgebildeten Radialflansch (36) abstützt und daß eine becherförmige Führungshülse (37) mit einem Zentralloch (38) im Hülsenboden auf dem Ventilstößel (27) so aufgeschoben ist, daß der Hülsenboden an dem Radialflansch (36) anliegt und der Hülsenschaft die Barrierefeder (34) und teilweise die Zylinderwand des Drehteils übergreift.

12. Ventil nach Anspruch 11, dadurch gekennzeichnet, daß der zylinderförmige Teil der Führungshülse (37) mindestens einen radial nach innen vorspringenden Anschlag (39) trägt, an dem die Schließkappe (29') mit einem an ihr ausgebildeten Gegenanschlag (40) durch die Barrierefeder (34) angelegt ist.
